(19) Europäisches Patentamt / European Patent Office / Office européen des brevets

(11) **EP 4 580 116 A1**

(12) **DEMANDE DE BREVET EUROPEEN**

(43) Date de publication:
**02.07.2025 Bulletin 2025/27**

(21) Numéro de dépôt: **24223396.3**

(22) Date de dépôt: **27.12.2024**

(51) Classification Internationale des Brevets (IPC):
**H04L 9/08** (2006.01)

(52) Classification Coopérative des Brevets (CPC):
**H04L 9/0855; H04L 9/0852**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **28.12.2023 FR 2315410**

(71) Demandeur: **THALES**
**92190 Meudon (FR)**

(72) Inventeur: **DE CHASTENET D'ESTERRE, Anne**
**92230 GENEVILLIERS (FR)**

(74) Mandataire: **Lavoix**
**2, place d'Estienne d'Orves**
**75441 Paris Cedex 09 (FR)**

(54) **PROCÉDÉ AMÉLIORÉ D'ÉCHANGE DE CLÉS S'APPUYANT SUR UN RÉSEAU QUANTIQUE ET UN SERVICE DE SÉCURITÉ ; INFRASTRUCTURE DE COMMUNICATION ASSOCIÉE**

(57) Pour un service de sécurité d'un réseau quantique associant un émetteur (210), utilisant une première clé ($K_A$), un destinataire (220), utilisant une seconde clé ($K_M$), et un serveur (260), le procédé consiste à : échanger (100) des première et seconde clés de chiffrement ($K_1$, $K_n$) entre l'émetteur et le destinataire ; calculer (310), par l'émetteur, une première chaine ($Ki_A$) en sommant la première clé et la seconde clé de chiffrement ; calculer (330), par le destinataire, une seconde chaine ($Ki_M$) en sommant la seconde clé et la première clé de chiffrement ; calculer (350), par le serveur, une chaine composite ($K'$) en sommant les première et seconde chaines ; sommer (370), par le destinataire, la chaine composite, la seconde chaine et la seconde clé, pour extraire la première clé.

FIG.4

**Description**

La présente invention a pour domaine général celui de la sécurité des technologies de l'information dans le cadre de la mise en oeuvre de réseaux de communications quantiques.

Plus particulièrement, l'invention s'applique aux procédés de transfert de clés fondés sur un réseau mettant en oeuvre un mécanisme de distribution de clés quantiques - QKD (« Quantum Key Distribution »).

La QKD permet une sécurité inconditionnelle des communications, y compris face à la puissance des futurs ordinateurs quantiques, qui devraient permettre de « casser » les procédés cryptographiques classiques (notamment avec l'algorithme de Shor, pour la cryptographique asymétrique).

La QKD met en oeuvre deux noeuds d'extrémité intégrant chacun des dispositifs quantiques, pour générer et partager une clé quantique le long d'un canal quantique établi entre ces deux dispositifs. Le canal quantique est établi sur une liaison optique, qui se doit d'être continue (comme une fibre optique ou un espace libre).

Cependant, en l'absence de répéteurs quantiques, la QKD est limitée en distance.

Pour des distances plus longues, des noeuds relais (ou de transit) sont intercalés entre les noeuds d'extrémité. Les différents noeuds étant alors distants de quelques dizaines de kilomètres seulement, il est possible d'établir des canaux quantiques entre les noeuds et ainsi de former un réseau QKD, aussi dénommé réseau sécurisé quantique - QSN (« Quantum Secured Network »). Sur le réseau QKD, deux noeuds reliés par un canal quantique partagent une clé dite « quantique ».

La question se pose alors de savoir comment acheminer une clé d'un noeud d'extrémité ou noeud émetteur, dénommé Alice dans ce qui suit, à un noeud d'extrémité ou noeud destinataire, dénommé Mike dans ce qui suit, en utilisant les clés quantiques sur les divers tronçons (ou sauts) d'un chemin sur le réseau QKD reliant Alice et Mike, en maximisant la confidentialité de ce transfert, notamment en cas d'attaque des noeuds du réseau QKD.

Le procédé de transfert de clé de l'état de la technique, tel que présenté dans la recommandation - ITU-T Y.3803 intitulée « Key management for quantum key distribution Networks » (« Gestion des clés pour les réseaux QKD »), de la commission d'études du secteur de la normalisation des télécommunications de l'Union Internationale des Télécommunications - UIT, réalise un chiffrement / déchiffrement tronçon par tronçon : dans un réseau QKD, un noeud déchiffre la clé qu'il reçoit d'un noeud amont avec la clé quantique qu'il partage avec ce nœud amont pour retrouver la clé à acheminer. Il utilise ensuite la clé quantique qu'il partage avec un noeud aval pour chiffrer la clé à acheminer et transmet la clé ainsi chiffrée au noeud aval. De proche en proche, la clé à acheminer est transmise de Alice à Mike.

Cependant, chaque noeud du réseau QKD peut connaître la clé à acheminer, lorsqu'elle transite par lui, puisqu'il possède les clés qui permettent de la chiffrer/déchiffrer.

C'est la raison pour laquelle les noeuds du réseau QKD doivent être des noeuds de confiance (« trusted node »).

Cette contrainte forte est un frein à l'adoption des réseaux QKD en raison du coût élevé des noeuds pour respecter le niveau de sécurité imposé par la classification des clés échangées sur le réseau QKD et des vulnérabilités induites par la présence de noeuds relais, qu'il s'agisse d'un défaut de protection d'un noeud relais ou d'un noeud relais malicieux (par exemple, dans le cas de transit par des domaines du réseau QKD non maîtrisés).

L'ITU-T Y.3803 propose cependant deux procédés alternatifs pour le transfert de clés, en mettant en oeuvre une entité spécifique, dénommée « noeud XOR » dans ce qui suit. Le noeud XOR fait partir d'un système de gestion de clés - KMS (« Key Management System ») du réseau QKD. Le noeud XOR est accessible par chacun des noeuds du réseau QKD, via une liaison de communication classique, par exemple du type IP.

Dans le premier procédé alternatif, le noeud XOR est non centralisé. C'est une fonctionnalité supplémentaire du destinataire, Mike. Dans la second procédé alternatif, le noeud XOR est centralisé. C'est une entité indépendante des noeuds du réseau QKD et des utilisateurs.

Selon ces procédés alternatifs, chaque noeud relais du réseau QKD construit une chaîne élémentaire de bits en sommant (opération « XOR » bit à bit) les deux clés quantiques de même taille qu'il partage respectivement avec un noeud amont et un noeud aval sur le chemin entre Alice et Mike. Chaque noeud relais transmet cette chaine élémentaire au noeud XOR.

Le noeud XOR calcule alors une chaîne globale en sommant (opérateur « XOR ») l'ensemble des chaînes élémentaires de tous les noeuds relais sur le chemin entre Alice et Mike. La chaîne globale est finalement égale à la somme des clés quantiques des noeuds d'extrémité, c'est-à-dire la somme de la clé quantique de l'émetteur, Alice, qui est la clé que l'on cherche ici à transférer vers Mike, et de la clé quantique du destinataire, Mike.

Dans le premier procédé alternatif, le noeud XOR étant une fonctionnalité du noeud destinataire, ce dernier connaît la somme globale. Dans le second procédé alternatif, la somme globale est transmise depuis le noeud XOR vers le noeud destinataire, par exemple sur la liaison de communication classique entre le noeud XOR et le noeud destinataire.

Mike n'a plus qu'à sommer sa clé quantique avec cette chaîne globale pour extraire la clé quantique d'Alice. Il peut alors la mémoriser en tant que clé de chiffrement pour des échanges ultérieurs avec Alice.

Il est à noter qu'il est parfois considéré, comme possible « clé à transférer », la concaténation d'une suite de bits aléatoires (qui constitue une clé à proprement parler) avec des metadata associées telles qu'identifiant, date de création, etc.).

On fera référence dans la suite de ce document à des « clés », sans perdre de vue que cela recouvre ces divers cas possibles d'implémentation, c'est-à-dire une clé comme « alea utile » ou une clé comme « alea utile augmenté de metadata ». Selon ces procédés alternatifs, les noeuds relais du réseau QKD n'ont plus la capacité immédiate de connaître la clé à acheminer. Seuls les noeuds d'accès disposent d'éléments de connaissance importants : celui auquel est connectée Alice a la connaissance directe de la clé quantique de l'émetteur, et celui auquel est connecté Mike peut la déduire s'il intercepte le message transmis à Mike par le noeud XOR, dans la mesure où il connaît la clé quantique du destinataire.

Le but de l'invention est alors de proposer des améliorations aux procédés connus d'échange de clés fondés sur un réseau QKD.

A cet effet, l'invention a pour objet un procédé d'échange de clés de chiffrement dans une infrastructure de communication , l'infrastructure de communication comportant un réseau mettant en oeuvre un mécanisme de distribution de clés quantiques, ou réseau QKD, le réseau QKD comportant un noeud émetteur un noeud destinataire et une pluralité de noeuds relais définissant un chemin sur le réseau QKD entre le noeud émetteur et le noeud destinataire , deux noeuds successifs le long du chemin étant adaptés pour générer et partager une clé quantique au travers d'un canal quantique reliant lesdits deux noeuds, caractérisé en ce que, l'infrastructure de communication comportant, en outre, un service de sécurité comportant un module de service de sécurité sur le noeud émetteur, associé à une première clé de sécurité , un module de service de sécurité sur le noeud destinataire , associé à une seconde clé de sécurité , et un serveur de service de sécurité en communication respectivement avec les modules de service de sécurité des noeuds émetteur et destinataire au moyen de liaisons de communication classiques, le procédé comporte les étapes de : échange d'une première clé de chiffrement du noeud émetteur vers le noeud destinataire et d'une seconde clé de chiffrement du noeuddestinataire vers le noeud émetteur ; calcul, par le noeud émetteur, d'une première chaine intermédiaire en sommant la première clé de sécurité et la seconde clé de chiffrement ; transmission de la première chaine intermédiaire vers le serveur de service de sécurité ; calcul, par le noeud destinataire , d'une seconde chaine intermédiaire en sommant la seconde clé de sécurité et la première clé de chiffrement ; transmission de la seconde chaine intermédiaire vers le serveur de service de sécurité ; calcul , par le serveur de service de sécurité , d'une chaîne composite résultant de la somme des première et seconde chaînes intermédiaires reçues des noeuds émetteur et destinataire ; transmission , par le serveur de service de sécurité , de la chaine composite au module de service de sécurité du noeud destinataire ; sommation , par le noeud destinataire , de la chaine composite , de la seconde chaine intermédiaire et de la seconde clé de chiffrement , pour extraire la première clé de sécurité , et mémorisation de la première clé de sécurité en tant que clé de chiffrement dans le volume de clés de chiffrement du noeud destinataire.

Suivant d'autres aspects avantageux de l'invention, le procédé comprend une ou plusieurs des caractéristiques suivantes, prises isolément ou suivant toutes les combinaisons techniquement possibles :

- le procédé comporte en outre : transmission , par le serveur de service de sécurité , de la chaine composite au module de service de sécurité du noeud émetteur ; et, sommation , par le noeud émetteur, de la chaine composite , de la première clé intermédiaire et de la première clé de chiffrement, pour extraire la seconde clé de sécurité , et mémorisation de la seconde clé de sécurité en tant que clé de chiffrement dans le volume de clés de chiffrement du noeud émetteur.

- une première clé de cryptage étant partagée entre le noeud émetteur et le serveur de sécurité , la première chaine intermédiaire est transmise cryptée le long de la liaison classique entre le module de service de sécurité du noeud émetteur et le serveur de service de sécurité en utilisant la première clé de cryptage et la chaine composite est transmise cryptée le long de la liaison classique entre le serveur de service de sécurité et le module de service de sécurité du noeud émetteur en utilisant la première clé de cryptage .

- une seconde clé de cryptage étant partagée entre le noeud destinataire et le serveur de sécurité , la seconde chaine intermédiaire est transmise cryptée le long de la liaison de communication classique entre le module de service de sécurité du noeud destinataire et le serveur de service de sécurité en utilisant la seconde clé de cryptage et la clé composite est transmise cryptée le long de la liaison de communication classique entre le serveur de service de sécurité et le module de service de sécurité du noeud destinataire en utilisant la seconde clé de cryptage .

- l'infrastructure comportant, en outre, une entité de calcul centralisée, ou « noeud XOR » , le noeud XOR étant connecté à chacun des noeuds du réseau QKD par une liaison de communication classique, le procédé comporte les étapes préalables de : calcul, par chaque noeud relais, d'une chaine élémentaire en sommant les deux clés quantiques des deux canaux quantiques issus dudit noeud relais, et transmission de la chaine élémentaire au noeud XOR ; calcul, par le noeud XOR , d'une chaine globale en sommant les chaines élémentaires reçues de chacun des noeuds relais présents le long du chemin entre le noeud émetteur et le noeud destinataire ; transmission , par le noeud XOR , de la chaine globale au noeud destinataire ; extraction , par le noeud destinataire , de la première clé de chiffrement du noeud émetteur en sommant la chaine globale et la seconde clé de chiffrement du noeud destinataire, et mémorisation de la première clé de chiffrement dans un volume de mémorisation de clés de chiffrement du noeud destinataire ; transmission , par le noeud XOR , de la clé globale au noeud émetteur ; et, extraction , par le noeud émetteur, de la seconde clé de chiffrement du noeud destinataire en sommant la chaine globale et la première clé de chiffrement du noeud émetteur, et mémorisation de la seconde clé de chiffrement dans un volume de mémorisation de clés de chiffrement du noeud émetteur.

L'invention a également pour objet une infrastructure de communication adaptée pour la mise en oeuvre du procédé d'échange de clés de chiffrement précédent, comportant un réseau mettant en oeuvre un mécanisme de distribution de clés quantiques, ou réseau QKD , le réseau QKD comportant un noeud émetteur, un noeud destinataire et une pluralité de noeuds relais définissant un chemin sur le réseau QKD entre le noeud émetteur et le noeud destinataire , deux noeuds successifs le long du chemin étant adaptés pour générer et partager une clé quantique au travers d'un canal quantique reliant lesdits deux noeuds, l'infrastructure comportant, en outre, un service de sécurité comportant un module de sécurité sur le noeud émetteur , associé à une première clé de sécurité , et un module de sécurité sur le noeud destinataire, associé à une seconde clé de sécurité, ainsi qu'un serveur de service de sécurité en communication respectivement avec les modules de service de sécurité des noeuds émetteur et destinataire au moyen de liaisons classiques.

Suivant d'autres aspects avantageux de l'invention, le procédé comprend une ou plusieurs des caractéristiques suivantes, prises isolément ou suivant toutes les combinaisons techniquement possibles :

- le serveur de service de sécurité est une fonctionnalité supplémentaire du noeud émetteur et/ou du noeud destinataire.
- l'infrastructure comporte, en outre, une entité de calcul, ou noeud XOR , le noeud XOR étant connecté à chacun des noeuds du réseau QKD par une liaison de communication classique.
- le noeud XOR est une fonctionnalité supplémentaire du noeud émetteur et/ou du noeud destinataire.
- les liaisons de communication étant des liaisons IP sur un réseau de communication classique, le serveur de service de sécurité, le module de service de sécurité du noeud émetteur et le module de service de sécurité du noeud destinataire utilisent des adresses IP réservées qui sont différentes des adresses IP des noeuds émetteur et destinataire, seules ces dernières étant connues par le réseau QKD.

L'invention apparaîtra plus clairement à la lecture de la description qui va suivre, donnée uniquement à titre d'exemple non limitatif, et faite en référence aux dessins dans lesquels :

[Fig. 1] la figure 1 est une représentation fonctionnelle schématique d'un premier mode de réalisation d'une infrastructure selon l'invention permettant l'échange de clés ;
[Fig. 2] la figure 2 est une représentation sous forme de blocs d'un premier mode de réalisation d'un procédé selon l'invention permettant l'échange de clés, ce procédé étant mis en oeuvre par l'infrastructure de la figure 1 ;
[Fig. 3] la figure 3 est une représentation fonctionnelle schématique d'un second mode de réalisation d'une infrastructure selon l'invention permettant l'échange de clés ;
[Fig. 4] la figure 4 est une représentation sous forme de blocs d'un second mode de réalisation d'un procédé selon l'invention permettant l'échange de clé dans l'infrastructure de la figure 3 ;
[Fig. 5] la figure 5 est une représentation fonctionnelle schématique d'un troisième mode de réalisation d'une infrastructure selon l'invention permettant l'échange de clés ; et,
[Fig. 6] la figure 6 est une représentation sous forme de blocs d'un troisième mode de réalisation d'un procédé selon l'invention permettant l'échange de clés dans l'infrastructure de la figure 5.

Dans ce qui suit, lorsque l'on parle de la somme de deux chaines de bits, il s'agit d'effectuer la somme bit à bit de ces deux chaines, c'est-à-dire appliquer l'opérateur XOR. Le résultat obtenu est une chaine de même longueur.

Une clé est une chaine particulière, dans la mesure où elle est destinée à être utilisée pour son caractère aléatoire et confidentiel (partagée uniquement avec les destinataires identifiés), notamment pour chiffrer une autre clé ou des données. En revanche, on utilise plus simplement le mot « chaine » pour le cas d'une suite de bits destinée à porter de l'information (par exemple, une donnée chiffrée, un calcul « XOR », etc.).

On parlera également de « clés », ou de « clés de chiffrement » pour les clés que le réseau QKD doit délivrer à ses utilisateurs. On utilisera le terme « clé de sécurité » pour distinguer le cas où la clé à transférer n'a pas été générée par des dispositifs QKD du réseau. En revanche, pour faciliter la lecture, on parlera de cryptage et de « clés de cryptage » pour les opérations de protection des transferts d'information par le réseau QKD ou par les procédés proposés, même si le terme « cryptage » est en fait impropre : il permet cependant ici de différencier le type de clés dont on parle et leur usage. On verra par la suite que le « cryptage » ici correspond à la protection d'échanges de chaines qui sont déjà en fait des clés chiffrées.

**Premier mode de réalisation : Symétrisation des échanges avec le noeud XOR**

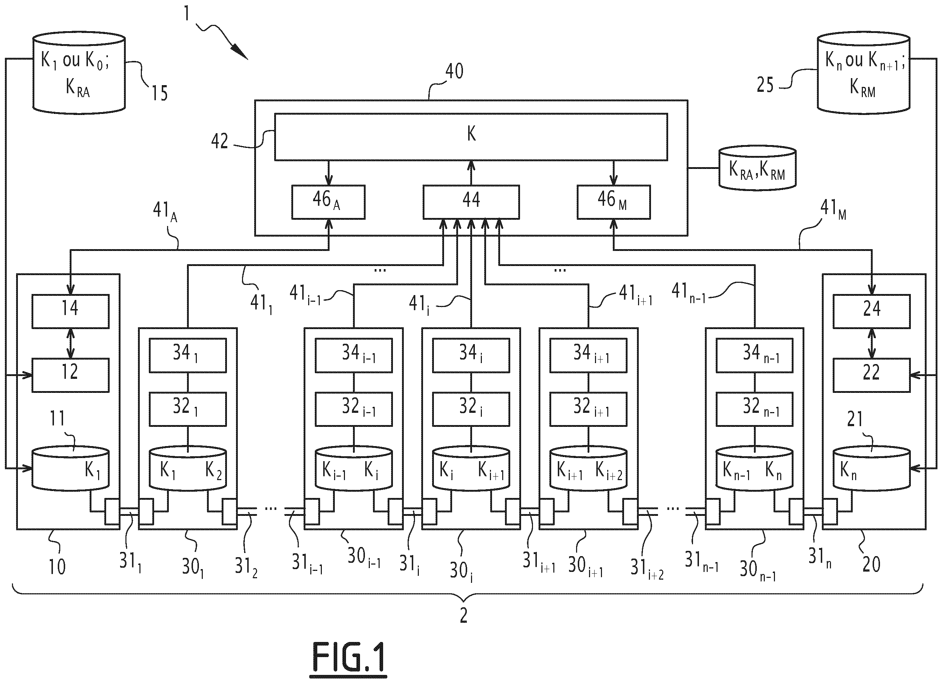

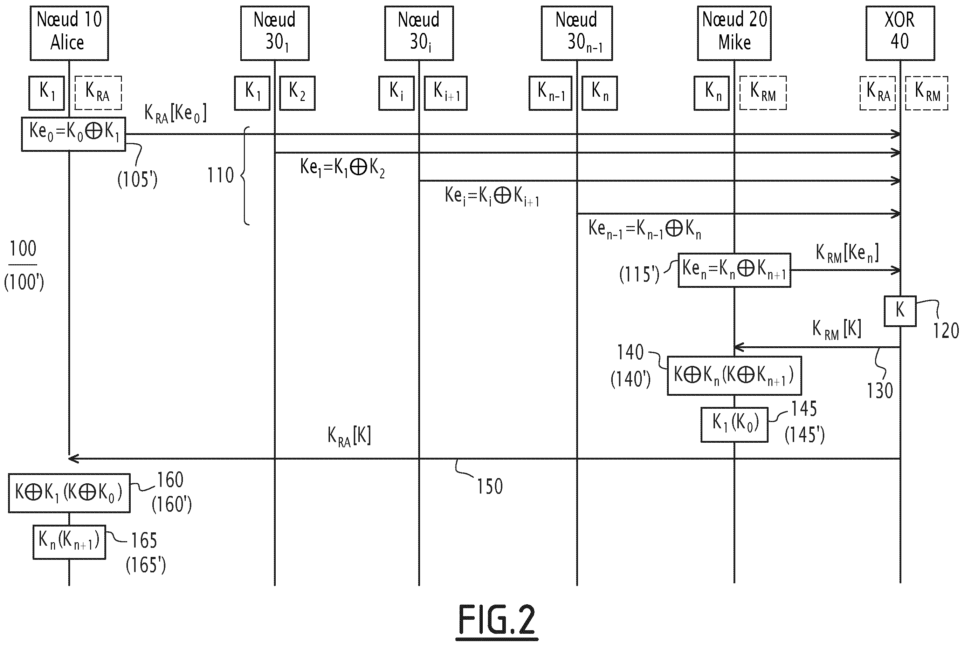

Un premier mode de réalisation de l'invention va être présenté en référence aux figures 1 et 2.

L'infrastructure de communication 1 est fondée sur un réseau QKD 2 sous-jacent.

Le réseau QKD 2 comporte des noeuds utilisateurs, respectivement un noeud émetteur 10, Alice, un noeud destinataire 20, Mike, ainsi qu'une pluralité de noeuds relais.

Un chemin sur le réseau QKD 2 a été établi entre le noeud émetteur 10 et le noeud destinataire 20. Le processus d'établissement de ce chemin est conforme à l'état de la technique. Il n'est pas précisé plus en détail ici, puisque ce processus sort du cadre de la présente invention.

Ce chemin passe par une succession de noeuds relais, qui sont indexés par l'entier i, entre 1 et n-1. Sur la figure 1, on a représenté le noeud relais d'accès côté émetteur, $30_1$, des noeuds relais intermédiaires, $30_{i-1}$, $30_i$, $30_{i+1}$, et le noeud relais d'accès côté destinataire, $30_{n-1}$, du chemin depuis Alice vers Mike.

Entre deux noeuds successifs de ce chemin, un canal quantique est établi. Ce canal et les dispositifs quantiques des noeuds d'extrémité permettent de générer et d'échanger des clés quantiques. Sur la figure 1, on a représenté les canaux $31_1$, $31_2$, $31_{i-1}$, $31_i$, $31_{j+i}$, $31_{i+2}$, $31_{n-1}$ et $31_n$ du chemin entre Alice et Mike.

Une clé quantique est régulièrement partagée et stockée par les noeuds d'extrémité d'un canal quantique. Les figures font apparaître uniquement les clés utilisées lors d'un échange de clés donné, i.e. à un instant donné.

Ainsi le noeud émetteur Alice et le premier noeud relais $30_1$ partagent une clé quantique $K_1$ ; le premier noeud relais $30_1$ et le second noeud relais partagent une clé quantique $K_2$ ; le noeud précédent $30_{i-1}$ et le noeud courant $30_i$ partagent une clé quantique $K_i$ ; le noeud courant $30_i$ et le noeud suivant $30_{i+1}$ partagent une clé quantique $K_{i+1}$ ; et, le noeud relais $30_{n-1}$ et le noeud destinataire Mike partagent une clé quantique $K_n$.

L'infrastructure 1 comporte un noeud XOR 40.

Si le noeud XOR peut être non centralisé (c'est-à-dire mis en oeuvre par un noeud du réseau, comme le noeud destinataire ou le noeud émetteur), de préférence le noeud XOR 40 est centralisé, comme cela est représenté sur la figure 1.

Le noeud XOR 40 est connecté à chaque noeud relais $30_i$ par une liaison de communication classique $41_i$. Cette liaison est par exemple une liaison classique, par exemple encore une liaison IP à travers un réseau étendu - WAN (« Wide Area Network »). Pour augmenter la sécurité, cette liaison est de préférence authentifiée selon les règles de l'art (par exemple par la mise en oeuvre de techniques de signature post-quantiques ou hybrides). Cet aspect est hors du cadre de la présente invention.

Le noeud XOR 40 est avantageusement colocalisé avec un noeud du réseau QKD, pour disposer de clés générées par le réseau QKD.

Pour gagner encore en sécurité, le noeud XOR 40 est avantageusement indépendant du réseau QKD 2, notamment d'un système de gestion de clés - KMS ou d'un contrôleur du réseau QKD. Cela permet d'éliminer par exemple les cas d'attaque par un noeud XOR malicieux collaborant avec le KMS du réseau QKD.

Chaque noeud relais comporte une unité $32_i$, adaptée pour effectuer la somme des deux clés quantiques associées aux deux canaux quantiques issus de ce noeud. Le résultat de cette opération est une chaîne élémentaire $Ke_i$. Par exemple, l'unité $32_i$ du noeud $30_i$ détermine la chaine élémentaire $Ke_i$ résultat de la somme des clés $K_i$ et $K_{i+1}$ mémorisées par le noeud relais $32_i$ : $Ke_i = K_i \oplus K_{i+1}$.

Chaque noeud relais, comme le noeud $30_i$, comporte une unité $34_i$, adaptée pour transmettre la chaine élémentaire $Ke_i$ calculée par l'unité $32_i$ vers le noeud XOR 40, via la liaison classique $41_i$.

Le noeud XOR 40 comporte une unité 44, qui est adaptée pour recevoir les chaines élémentaires $Ke_i$ de chacun des noeuds relais $30_i$ du chemin entre Alice et Mike.

Le noeud XOR 40 comporte une unité 42, qui est adaptée pour sommer les chaines élémentaires provenant de l'ensemble des noeuds relais le long du chemin entre Alice et Mike. Le résultat de cette opération est une chaine globale K.

Sachant que sommer deux fois la même clé revient à effectuer l'opération identité, la chaine globale K respecte donc la relation :

$$K = (K_1 \oplus K_2) \oplus ... \oplus (K_{i-1} \oplus K_i) \oplus (K_i \oplus K_{i+1}) \oplus (K_{i+1} \oplus K_{i+2}) \oplus ... \oplus (K_{n-1} \oplus K_n)$$

$$K = K_1 \oplus K_n$$

Le noeud XOR 40 comporte une unité $46_M$ qui est adaptée pour transmettre la chaine globale K au destinataire 20, Mike, le long d'une liaison de communication classique et de préférence authentifiée $41_M$, par exemple une liaison IP du WAN, entre le noeud XOR 40 et le noeud destinataire 20. En variante, lorsque le noeud XOR est une fonctionnalité d'un noeud utilisateur, comme le noeud destinataire, il s'agit d'une liaison au sens fonctionnel (interne au noeud).

De manière symétrique, le noeud XOR 40 comporte une unité $46_A$ qui est adaptée pour transmettre la chaine globale K à l'émetteur 10, Alice, le long d'une liaison de communication classique et de préférence authentifiée $41_A$, par exemple une liaison IP du WAN, entre le noeud 40 et le noeud émetteur 10.

Un noeud utilisateur, émetteur 10 ou destinataire 20, comporte :

- un volume de mémorisation de ses propre clés quantiques, respectivement 11 et 21 ;
- une unité de communication avec le noeud XOR 40, respectivement 14 et 24 ;
- une unité de calcul, notamment propre à déchiffrer les informations reçues du noeud XOR 40, respectivement 12 et 22 ; et,
- un volume de mémorisation de clés de chiffrement, respectivement 15 et 25, contenant des clés utilisables pour le chiffrement des communications, notamment celles entre Alice et Mike.

En se référant à la figure 2, un mode de réalisation du procédé d'échange de clés de chiffrement va être présenté.

Le procédé 100 comporte les étapes successives suivantes :

Suite à une demande de clés et à l'établissement d'un chemin entre Alice et Mike sur le réseau QKD 2, dans l'étape 110, l'unité de calcul $32_i$ de chaque noeud relais $30_i$ le long de ce chemin effectue la somme des deux clés quantiques qu'il possède en mémoire : $Ke_i = K_i \oplus K_{i+1}$.

Il est à noter qu'un noeud relais peut en fait mémoriser de nombreuses clés quantiques, mais le choix des deux clés à sommer parmi l'ensemble des clés disponibles est hors du périmètre de l'invention et s'effectue selon l'état de la technique.

L'unité de transmission $34_i$ de chaque noeud relais $30_i$ transmet la chaine élémentaire $Ke_i$ obtenue, vers le noeud XOR 40.

Dans l'étape 120, l'unité 44 du noeud XOR 40 reçoit les chaines élémentaires $Ke_i$ des noeuds relais d'accès et intermédiaires présents le long du chemin entre Alice et Mike et les transmet à l'unité de calcul 42. Celle-ci effectue la somme des chaines élémentaires. Le résultat de cette opération est la chaine globale K :

$$K = (K_1 \oplus K_2) \oplus \ldots \oplus (K_{i-1} \oplus K_i) \oplus (K_i \oplus K_{i+1}) \oplus \ldots \oplus (K_{n-1} \oplus K_n) = K_1 \oplus K_n$$

À l'étape 130, la chaine globale K est transmise à Mike le long de la liaison $41_M$ entre l'unité $46_M$ et l'unité de communication 24 de Mike.

Dans l'étape 140, l'unité 22 somme la chaine globale K avec la clé quantique $K_n$ de Mike, de manière à extraire la clé quantique $K_1$ d'Alice.

Mike mémorise (étape 145) la clé quantique $K_1$ en tant que nouvelle clé de chiffrement dans son volume de mémorisation de clés de chiffrement 25, à côté de sa clé quantique $K_n$. Ainsi Alice a réussi à acheminer sa clé quantique $K_1$ à Mike.

De manière symétrique, dans l'étape 150, le noeud XOR 40 transmet la chaine globale K à Alice, le long de la liaison $41_A$ entre l'unité $46_A$ et l'unité de communication 14 d'Alice.

Dans l'étape 160, l'unité de calcul 12 d'Alice somme la chaine globale K avec sa clé quantique $K_1$, de manière à extraire la clé quantique $K_n$ de Mike.

Alice mémorise (étape 165) la clé quantique $K_n$ en tant que nouvelle clé de chiffrement dans son volume de mémorisation de clés de chiffrement 15, à côté de sa propre clé quantique $K_1$. Ainsi, simultanément, Mike a fourni sa clé quantique $K_n$ à Alice.

Ainsi, le procédé 100 réalise la transmission de la chaine globale K calculée par le noeud XOR 40 non seulement au noeud destinataire, Mike, mais également et simultanément au noeud émetteur, Alice.

Effectuer simultanément la transmission de la chaine globale aux deux utilisateurs permet d'économiser des ressources en permettant non seulement à Alice de transmettre un secret à Mike, mais simultanément à Mike de transmettre un secret à Alice. En particulier, les deux utilisateurs échangent simultanément deux clés de chiffrement $K_1$ et $K_n$ sans consommer davantage de clés quantiques de transport.

Au lieu d'itérer le procédé d'échange de clés selon l'état de la technique en permutant émetteur et destinataire, le procédé selon l'invention permet à l'émetteur d'obtenir, à un coût marginal, une clé de chiffrement supplémentaire lui permettant de chiffrer des échanges à venir avec le destinataire.

Le procédé selon l'invention permet donc de multiplier par deux les performances du réseau QKD.

Dans une première variante de ce premier mode de réalisation, une première clé de cryptage $K_{RA}$, est partagée entre Alice et le noeud XOR 40 et/ou une seconde clé de cryptage $K_{RM}$ est partagée entre Mike et noeud XOR 40.

La manière de partager les clés de cryptage $K_{RA}$ et $K_{RM}$ entre un noeud utilisateur et le noeud XOR, ainsi que la manière dont ils la mettent ultérieurement à jour (en la combinant avec des clés QKD par exemple) est hors de la portée de la présente demande de brevet. Elle s'effectue selon des techniques connues de l'homme du métier ou bien par le procédé 100 décrit précédemment, le noeud XOR étant alors impérativement un noeud du réseau QKD et jouant alors le rôle d'émetteur / destinataire du secret à partager.

Ainsi, dans l'étape 130, ce n'est plus la chaine globale K qui est transmise entre le noeud XOR 40 et Mike, mais la chaine globale K cryptée par l'unité de calcul 40 du noeud XOR avec la seconde clé de cryptage $K_{RM}$.

Dans l'étape 140, l'unité de calcul 22 de Mike commence par décrypter l'information reçue en utilisant la seconde clé de cryptage $K_{RM}$ avant d'appliquer sa clé quantique $K_n$ afin de retrouver la clé quantique $K_1$ d'Alice. Ainsi, un cryptage supplémentaire est mis en oeuvre sur le lien $41_M$

De manière similaire, dans l'étape 150, ce n'est plus la chaine globale K qui est transmise du noeud XOR 40 à Alice, mais la chaine globale K cryptée par l'unité de calcul 40 du noeud XOR avec la première clé de cryptage $K_{RA}$.

Dans l'étape 160, l'unité de calcul 12 d'Alice commence par décrypter l'information reçue en utilisant sa première clé de cryptage $K_{RA}$, avant d'appliquer sa clé quantique $K_1$ afin de retrouver la clé quantique de Mike $K_n$.

Dans une seconde variante du procédé, ou procédé 100' sur la figure 2, Alice cherche à transmettre à Mike une autre clé de chiffrement que la première clé quantique K1, qui est partagée avec le premier noeud relais du chemin du réseau QKD 2 qui mène à Mike. Elle veut par exemple transmettre une première clé dite classique, K0, qu'elle l'ait acquise par un moyen externe (application spécifique ou injecteur de clé) ou qu'elle ait été générée par un générateur de nombres aléatoires vrais (« True Random Number Generator »), de préférence quantique. Pour la transmettre, il suffit qu'Alice somme (étape 105') la première clé classique K0 avec la première clé quantique K1 et envoie la première chaine élémentaire supplémentaire Ke0 ainsi obtenue au noeud XOR 40, comme le font les noeuds relais. Le noeud XOR calcule alors une chaîne globale intégrant cette première chaîne élémentaire supplémentaire :

$$K= (K0 \oplus K1) \oplus (K1 \oplus K2) \oplus \ldots \oplus (Ki\text{-}1 \oplus Ki) \oplus (Ki \oplus Ki\text{+}1) \oplus (Ki\text{+}1 \oplus Ki\text{+}2) \oplus \ldots \oplus (Kn\text{-}1 \oplus Kn)$$

Ce qui se réduit à :

$$K= K_0 \oplus K_n$$

Mike est alors capable de retrouver la première clé classique $K_0$ en tant que première clé de chiffrement en sommant (étape 140) sa clé quantique $K_n$ à la chaîne globale K qu'il reçoit du noeud XOR.

Dans cette variante, la chaîne qu'Alice cherche à transmettre à Mike n'est pas connue du premier noeud relais $30_1$ (au contraire de la clé quantique $K_1$ que partage Alice avec ce noeud d'accès $30_1$).

Cette variante permet donc d'améliorer la sécurité de la solution proposée, puisqu'il faudrait non seulement corrompre le noeud d'accès $30_1$ pour connaitre $K_1$, mais également intercepter l'envoi d'Alice vers le noeud XOR 40, contenant l'information $K_0 \oplus K_1$, pour retrouver $K_0$.

De manière symétrique, pour améliorer la sécurité vis-à-vis d'une corruption du noeud d'accès $30_n$ côté destinataire, qui donnerait accès à la seconde clé quantique $K_n$, Mike peut également préférer vouloir transférer à Alice une seconde clé classique, $K_{n+1}$. Il la somme (étape 115') avec la seconde clé quantique $K_n$ et transmet une seconde chaîne élémentaire supplémentaire $Ke_n$ ainsi obtenue au noeud XOR 40 pour que ce dernier la prenne en compte dans le calcul de la chaine globale K.

Lorsqu'Alice reçoit la chaine globale K, elle est alors capable de retrouver la seconde clé classique $K_{n+1}$ en tant que seconde clé de chiffrement en sommant (étape 160) sa clé quantique $K_1$ à la chaîne globale K reçue du noeud XOR.

La combinaison de ces deux dernières variantes est envisageable. Elle correspond à l'utilisation d'une première clé classique $K_0$ non seulement du côté d'Alice mais également d'une second clé classique $K_{n+1}$ du côté de Mike est envisageable. Il faut alors qu'Alice utilise (étape 160') sa clé classique $K_0$ pour extraire de la clé globale K la clé classique $K_{n+1}$ de Mike et mémorise cette dernière (étape 165'), et que de son côté, Mike utilise (étape 140') sa clé classique $K_{n+1}$ pour extraire de la clé globale K la clé classique $K_0$ d'Alice et mémorise cette dernière (étape 145').

Il est à noter que, dans ces variantes, le cryptage des échanges avec la première clé de cryptage et/ou la seconde clé de cryptage permet également de crypter les chaines élémentaires supplémentaires envoyées par Alice et/ou Mike au noeud XOR. Ceci évite que l'interception du flux sortant d'un utilisateur (correspondant à $K_0 \oplus K_1$ pour Alice), ainsi que la corruption du noeud permettant à cet utilisateur d'accéder au réseau QKD (donnant accès à Ka) permette de découvrir la clé classique de l'utilisateur (ici Ka).

Ce premier mode de réalisation présente également un gain de sécurité due au partitionnement des informations, le noeud XOR étant avantageusement une entité distincte (avantageusement fournie par un opérateur différent) des entités associées au réseau QKD (comme le système de gestion des clés - KMS ou le contrôleur du réseau QKD).

## Second mode de réalisation : service de sécurité supplémentaire d'amélioration de la confidentialité

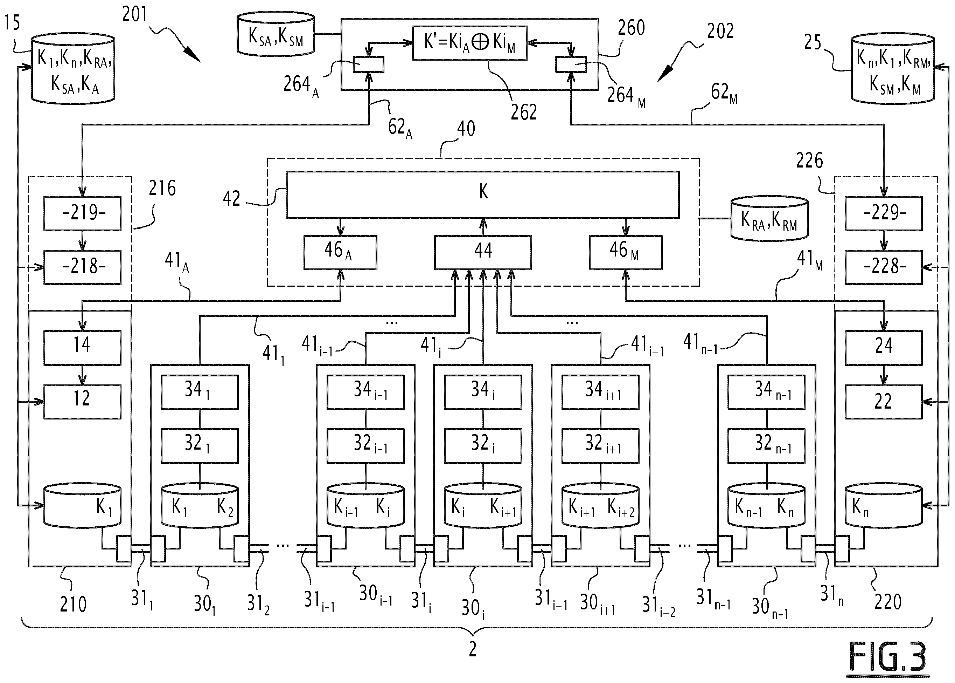

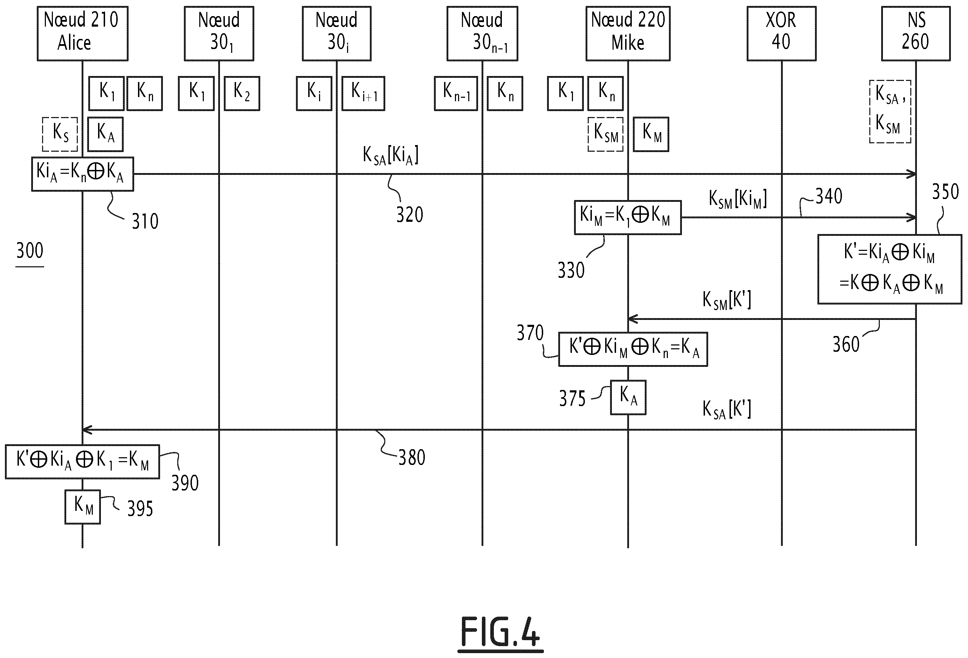

Un second mode de réalisation de l'invention va être présenté en référence aux figures 3 et 4.

La figure 3 est une représentation schématique d'un second mode de réalisation de l'infrastructure de communication.

Un élément du second mode de réalisation identique à un élément du premier mode de réalisation est identifié sur la figure 3 par un chiffre de référence égal à celui utilisé sur la figure 1 pour désigner cet élément identique.

Un élément du second mode de réalisation similaire à un élément du premier mode de réalisation est identifié sur la figure 3 par un chiffre de référence correspondant à celui utilisé sur la figure 1 pour désigner cet élément, augmenté de deux centaines.

L'infrastructure 201 est fondée sur un réseau QKD 2 reprenant l'ensemble des composants du réseau QKD 2 de l'infrastructure 1, à l'exception éventuellement du noeud XOR 40 qui peut ne pas être présent pour la mise en oeuvre de ce second mode de réalisation. L'infrastructure 201 met en oeuvre un service de sécurité 202.

Le service de sécurité 202 comporte, sur chaque noeud utilisateur cherchant à partager une clé de chiffrement, un module de service de sécurité supplémentaire. Ainsi Alice met en oeuvre un module de service de sécurité 216 et Mike met en oeuvre un module de service de sécurité 226.

Un module de service de sécurité, 216, respectivement 226, comporte une unité de calcul, 218, 228, et une unité de communication 219, 229 pour la communication avec un serveur de service de sécurité.

De plus, le service de sécurité 202 comporte un serveur de service de sécurité 260, sur lequel le service 202 s'appuie. Dans le mode de réalisation représenté sur la figure 3, le serveur 260 est une entité physique distincte des noeuds utilisateurs. Mais, en variante, ce serveur de service de sécurité peut être une fonctionnalité des deux noeuds utilisateurs, conduisant à des échanges directs entre Alice et Mike.

Le serveur 260 comporte une unité de calcul 262 et une unité de communication $264_A$ dédiée à la communication avec Alice et une unité de communication $264_M$ dédiée à la communication avec Mike.

Le module de service de sécurité d'un noeud utilisateur communique avec le serveur 260 via une liaison de communication classique et avantageusement authentifiée, $62_A$ pour Alice et $62_M$ pour Mike. Il s'agit par exemple d'une liaison classique, par exemple encore d'une liaison IP sur un réseau classique du type WAN. Cette liaison n'est que fonctionnelle dans la variante où le serveur de service de sécurité est fourni par l'un des noeuds utilisateurs.

Avantageusement, le serveur 260 est caché («service fantôme »), par exemple en utilisant un jeu d'adresses IP réservées, différentes de celles des noeuds associés au réseau QKD 2, et inconnues du réseau QKD.

Avantageusement, ce jeu de d'adresses IP réservées est spécifique d'un opérateur du service de sécurité 202. Cet opérateur contrôle l'abonnement des utilisateurs au service de sécurité et les droits d'accès de ces utilisateurs abonnés.

Par ailleurs, Alice possède une clé de chiffrement classique, dénommée première clé de sécurité, $K_A$, de préférence localement générée, qu'elle souhaite partager avec Mike. Et avantageusement, Mike possède une clé de chiffrement, dénommée seconde clé de sécurité, $K_M$, de préférence localement générée, qu'il souhaite partager avec Alice en même temps qu'il reçoit la première clé de sécurité $K_A$ d'Alice.

Le procédé d'échange des clés de chiffrement, $K_A$ et $K_M$, mis en oeuvre dans cette seconde infrastructure 201 va maintenant être présenté en référence à la figure 4.

Le procédé 300 débute une fois qu'un premier échange de clés de chiffrement a été réalisé entre Alice et Mike de manière à ce que Alice et Mike partagent des première et seconde clé de chiffrement.

Dans ce qui suit, la première clé de chiffrement est une première clé quantique $K_1$, mais pourrait être en variante une première clé classique $K_0$.

Dans ce qui suit la seconde clé de chiffrement est une seconde clé quantique $K_n$, mais pourrait être en variante une seconde clé classique $K_{n+1}$.

Cela signifie par exemple que le procédé 100 de la figure 2 a été mis en oeuvre préalablement au procédé 300 (l'infrastructure comporte alors nécessairement un noeud XOR 40). Alternativement, c'est un procédé conforme à l'état de la technique qui a été mis en oeuvre une fois de Alice vers Mike pour partager la première clé de chiffrement, puis une autre fois de Mike vers Alice pour partager la seconde clé de chiffrement.

Dans une étape 310, le module de service de sécurité 216 du noeud émetteur 210, Alice, calcule une première chaine intermédiaire Kia, en sommant la seconde clé de chiffrement $K_n$ et la première clé de sécurité $K_A$.

La première chaine intermédiaire Kia, ainsi calculée est transmise, au cours de l'étape 320, au serveur de sécurité 260.

De préférence, de manière symétrique et simultanée, à l'étape 330, le module de service de sécurité 226 du noeud destinataire 220, Mike, calcule une seconde chaine intermédiaire $Ki_M$ en sommant la première clé de chiffrement $K_1$ avec la seconde clé de sécurité $K_M$.

Dans l'étape 340, cette seconde chaine Kinn est transmise au serveur de sécurité 260.

Dans l'étape 350, le serveur de sécurité 260 calcule une chaine composite K' résultant de la somme des première et seconde chaines intermédiaires $Ki_A$ et $Ki_M$ reçues d'Alice d'une part et de Mike d'autre part.

La chaine composite K' peut s'écrire :

$$K' = Ki_A \oplus Ki_M = (K_n \oplus K_A) \oplus (K_1 \oplus K_M) = K \oplus K_A \oplus K_M$$

Elle correspond donc à la somme des clés de chiffrement à échanger avec la chaine globale K, telle que définie dans le premier mode de réalisation.

À l'étape 360, la chaine composite K' est transmise par le serveur 260 au module 226 du noeud destinataire 220.

Dans l'étape 370, le module 226 du noeud destinataire 220 somme la chaine composite K' reçue, la seconde chaine intermédiaire $Ki_M$ et la seconde clé de chiffrement $K_n$. Le résultat de cette opération est égal à la première clé de sécurité $K_A$. Ainsi Alice a réussi à transmettre à Mike la clé $K_A$. Celle-ci est mémorisée (étape 375) par Mike en tant que nouvelle clé de chiffrement dans le volume 25 de sauvegarde des clés de chiffrement.

De manière symétrique, à l'étape 380, la clé composite K' est transmise par le serveur 260 au module 216 du noeud émetteur 210.

Dans l'étape 390, le module 216 du noeud émetteur 210 somme la chaine composite K' reçue, la première chaine intermédiaire Kia, et la première clé de chiffrement $K_1$. Le résultat de cette opération est égal à la seconde clé de sécurité $K_M$. Ainsi Mike a réussi à transmettre à Alice la clé $K_M$. Celle-ci est mémorisée (étape 395) par Alice en tant que nouvelle clé de chiffrement dans le volume 15 de sauvegarde des clés de chiffrement.

Le procédé 300, en scindant les opérations entre le noeud XOR 40 (échange de la chaine globale K pour le partage de la première paire de clés de chiffrement $K_1$ et $K_n$) et le serveur de service de sécurité 260 (échange de la chaîne composite K' pour le partage de la seconde paire de clés de chiffrement $K_A$ et $K_M$), permet aux échanges liés au partage de la seconde paire de clés de chiffrement de ne pas être facilement identifiables comme relatifs aux utilisateurs connus du réseau QKD 2 sous-jacent, notamment du noeud XOR 40 lorsqu'il y en a un.

Dans une première variante de ce second mode de réalisation, une première clé de cryptage de sécurité $K_{SA}$ est partagée entre Alice et le serveur 260 et une seconde clé de cryptage de sécurité $K_{SM}$ est partagée entre Mike et le serveur 260. Ces deux clés peuvent être identiques, notamment lors de l'installation du service avant d'être différenciées l'une de l'autre par des mises à jour indépendantes.

La manière dont ces première et seconde clés de cryptage, $K_{SA}$ et $K_{SM}$, sont échangées, ainsi que la manière dont ils la mettent ultérieurement à jour (en la combinant par exemple avec des clés quantiques) est hors de la portée de la présente demande de brevet. Elle implique la mise en oeuvre de techniques connues, comme par exemple une distribution manuelle de clés (« trusted courier »).

La première clé de cryptage $K_{SA}$ permet de sécuriser les échanges entre Alice et le serveur de service 260. La seconde clé de cryptage $K_{SM}$ permet de sécuriser les échanges entre Mike et le serveur de service de sécurité 260.

Ainsi, pour l'étape 320, la première chaine intermédiaire $Ki_A$ est cryptée par l'émetteur avec la clé $K_{SA}$, puis transmise cryptée au serveur 260, qui la décrypte en utilisant également la clé $K_{SA}$.

De même, pour l'étape 340, la seconde chaine intermédiaire $Ki_M$ est cryptée par le destinataire avec la clé $K_{SM}$, puis transmise cryptée au serveur 260, qui la décrypte en utilisant également la clé $K_{SM}$.

Le serveur de sécurité 260 calcule donc la chaine composite K' après avoir déchiffré les envois d'Alice et Mike.

Avantageusement, pour l'étape 380, le serveur 260 crypte la clé composite K' en utilisant la clé $K_{SA}$, puis la clé composite est transmise cryptée à Alice, qui la décrypte en utilisant également la clé $K_{SA}$. De même, pour l'étape 360, le serveur 260 crypte la clé composite K' en utilisant la clé $K_{SM}$, puis la clé composite est transmise cryptée à Mike, qui la décrypte en utilisant également la clé $K_{SM}$.

Les autres étapes du procédé restent inchangées.

Ce second mode de réalisation présente une sécurité renforcée fondée sur la génération hors du réseau QKD des clés de chiffrement $K_A$ et $K_M$. Pour qu'un attaquant obtienne ces informations il faut a minima qu'il attaque un noeud d'accès du réseau QKD (pour obtenir $K_1$ et $K_n$), le serveur de service, dont il ne connaît a priori pas les adresses, (pour identifier les adresses IP d'Alice et Mike particulières et connues seulement du service de sécurité) et décrypter les échanges entre Alice et Mike, d'une part, et le serveur de service, d'autre part.

**Troisième mode de réalisation : service supplémentaire de création de clés à intégrité garantie.**

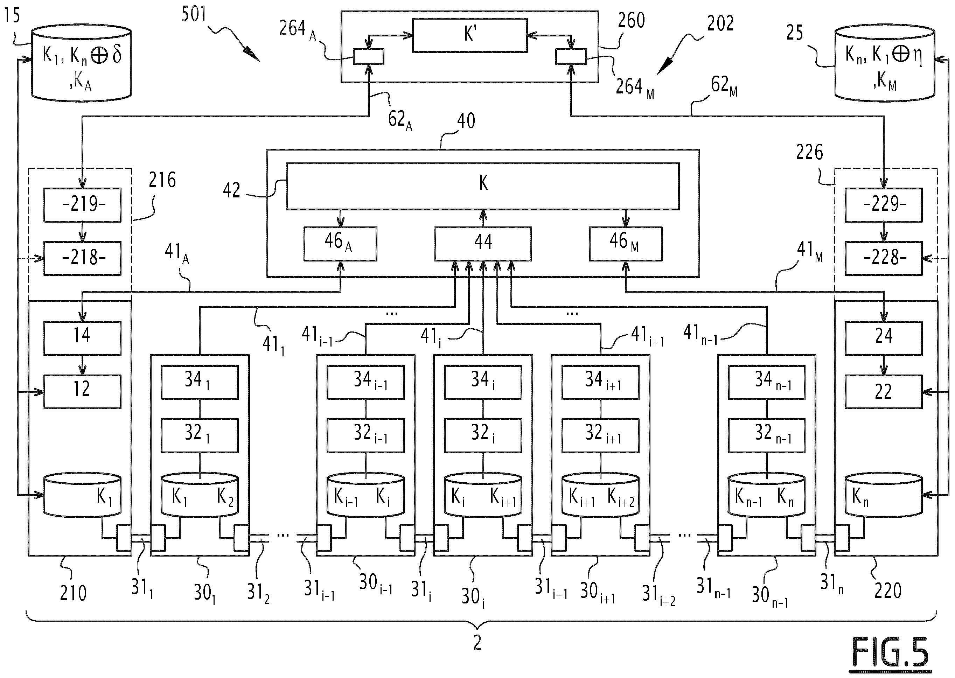

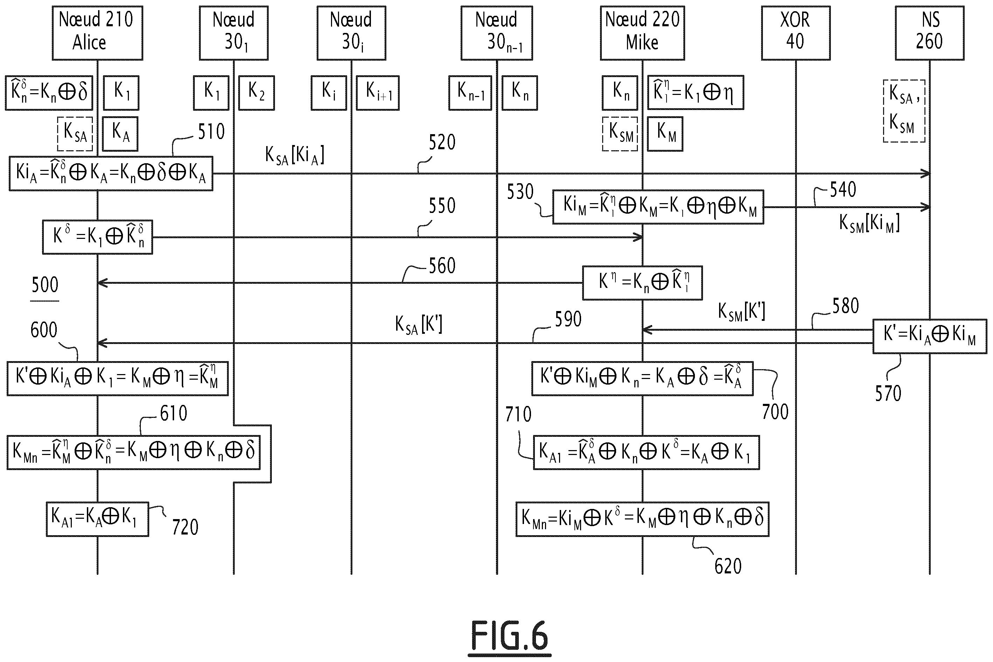

Un troisième mode de réalisation de l'invention va être présenté en référence aux figures 5 et 6.

A l'issue de la mise en oeuvre d'un procédé conforme aux modes de réalisation présentés ci-dessus, Alice et Mike peuvent (et doivent) réaliser un contrôle d'intégrité sur une clé de chiffrement qu'ils se sont échangée. Il peut s'agir par exemple de la transmission d'une valeur de hachage (« hash value ») de la clé de chiffrement échangée afin de vérifier qu'ils disposent tous les deux bien de la même clé. Lorsque ce contrôle d'intégrité échoue, la clé de chiffrement reçue étant entachée d'erreur par rapport à la clé de chiffrement initiale, cette clé n'est pas utilisable pour le chiffrement des échanges entre ces deux utilisateurs. Le procédé d'échange de clés de chiffrement a donc échoué.

Se prémunir d'éventuelles problèmes quant à l'intégrité des clés échangées est essentiel pour éviter des attaques très simples par des noeuds du réseau QKD malicieux qui mèneraient à un déni de service sans qu'il soit possible de déterminer l'élément perturbateur. Ce serait par exemple le cas d'un chemin sur le réseau QKD incluant des noeuds appartenant à des domaines non maitrisés, induisant des erreurs, soit volontairement soit involontairement, dans leur contribution aux calculs.

De manière particulièrement avantageuse, ce troisième mode de réalisation permet un échange de clés, dont l'intégrité est garantie. En effet, ce procédé permet de réaliser une compensation d'éventuelles erreurs introduites lors de l'échange.

Cette compensation est rendue possible par le partage des clés de chiffrement de sécurité $K_A$ et $K_M$ au moyen du service de sécurité que l'on considère être assuré de façon sincère et intègre et réalisé sans utiliser le réseau QKD.

L'infrastructure 501 de la figure 5 pour la mise en oeuvre de ce troisième mode de réalisation est similaire à l'infrastructure 201 de la figure 3. Elle se différencie éventuellement par des codes logiciels supplémentaires et des informations mémorisées par les noeuds émetteur 210 et destinataire 220.

Lors de la mise en oeuvre du procédé 100 selon le mode de réalisation, le noeud XOR 40 transmet à Alice et Mike une chaine de bits, notée $K^{err}$, qui devrait correspondre à la chaine globale K, mais qui est potentiellement la chaine globale K entachée d'une erreur, err. Il peut s'agir d'un noeud relais, défaillant ou malicieux, injectant une erreur. Il peut s'agir également du noeud XOR, défaillant ou malicieux, injectant une erreur lors du calcul de la somme des clés élémentaires, ou injectant des erreurs différentes entre la transmission à Alice et la transmission à Mike.

Dans ce cas, il est nécessaire d'estimer l'impact de ces erreurs sur les clés détenues par Alice et Mike. En effet, les utilisateurs n'ont en fait accès qu'à des estimations des clés ou chaines initiales. Une clé ou la chaine estimée est notée en ajoutant un « chapeau » à la notation de la clé ou de chaine initiale correspondante (c'est-à-dire la clé ou la chaine vraie sans erreur). Par exemple, si $K_A$ est la valeur de la clé de chiffrement de sécurité générée par Alice, Alice connaît $K_A$ mais Mike estime une valeur éventuellement différente, $\hat{K}_A$.

Par exemple, lors de la mise en oeuvre du procédé 100, le noeud XOR 40 transmet à Alice l'information :

$$K^{\delta} = K_1 \oplus K_n \oplus \delta$$

où $\delta$ est une première erreur.

Alice estime alors une seconde chaine de chiffrement :

$$\hat{K}_n^{\delta} = K^{\delta} \oplus K_1 = K_n \oplus \delta$$

Alice fait donc une erreur égale à $\delta$ sur la valeur de la seconde clé de chiffrement $K_n$. Parallèlement, le noeud XOR 40 transmet à Mike l'information :

$$K^{\eta} = K_1 \oplus K_n \oplus \eta$$

où $\eta$ est une seconde erreur.

Mike estime alors une première chaine de chiffrement :

$$\hat{K}_1^{\eta} = K^{\eta} \oplus K_n = K_1 \oplus \eta$$

Mike fait donc une erreur égale à $\eta$ sur la valeur de première clé de chiffrement $K_1$.

Selon le procédé 500, dans une étape 510, Alice calcule une première chaîne intermédiaire $Ki_A$:

$$Ki_A = \hat{K}_n^{\delta} \oplus K_A = K_n \oplus \delta \oplus K_A$$

Il y a sommation d'une information potentiellement erronée venant du destinataire, avec une information vraie détenue par l'émetteur.

Dans une étape 520, le module de service de sécurité 216 d'Alice transmet (de façon cryptée si cette variante est implémentée) au serveur de service de sécurité 260 la première chaine intermédiaire $Ki_A$.

De son côté, dans l'étape 530 Mike calcule une seconde chaine intermédiaire $Ki_M$ :

$$Ki_M = \hat{K}_1^{\eta} \oplus K_M = K_1 \oplus \eta \oplus K_M$$

Il y a sommation d'une information potentiellement erronée venant de l'émetteur, avec une information vraie détenue par le destinataire.

Dans une étape 540, le module de service de sécurité 226 de Mike transmet (de façon cryptée si cette variante est implémentée) au serveur de service sécurité 260 la seconde chaine intermédiaire $Ki_M$.

Parallèlement, dans une étape 550, Alice retransmet à Mike, de préférence directement pour renforcer la sécurité, la première chaine globale qu'elle-même avait reçue du noeud XOR 40 à l'étape 150 du procédé 100 (ou qu'elle calcule dans la variante où le procédé 100 n'a pas été mis en oeuvre et l'échange de la première paire de clés de chiffrement $K_1$ et $K_n$ a été réalisée d'une autre manière). Cette première chaine globale est la somme des clés de chiffrement potentiellement affectée de la première erreur :

$$K^\delta = K_1 \oplus \widehat{K}_n^\delta = K_1 \oplus K_n \oplus \delta$$

De manière symétrique, mais facultative, dans une étape 560, Mike informe Alice en lui transmettant la seconde chaine globale que lui-même avait reçue du noeud XOR 40 à l'étape 130 du procédé 100. Cette seconde chaine globale est la somme des clés de chiffrement potentiellement affectée de la seconde erreur :

$$K^\eta = K_n \oplus \widehat{K}_1^\eta = K_1 \oplus K_n \oplus \eta$$

A l'étape 570, le serveur de sécurité 260 calcule une chaine composite K' en sommant les première et seconde chaines intermédiaires : $K' = Ki_A \oplus Ki_M$

Soit :

$$K' = (K_n \oplus \delta \oplus K_A) \oplus (K_1 \oplus \eta \oplus K_M)$$

Le serveur 260 est de confiance et n'introduit pas d'erreur (i.e. le lien entre Alice et Mike à travers le serveur de sécurité 260 est intègre et authentifié).

A l'étape 580, la chaine composite K' est transmise à Mike et à l'étape 590 la chaine composite K' est transmise à Alice.

A l'étape 700, Mike calcule la somme de la chaine composite K', de la seconde chaine intermédiaire $Ki_M$ et de la seconde clé de chiffrement $K_n$ :

$$K' \oplus Ki_M \oplus K_n = (Ki_A \oplus Ki_M) \oplus Ki_M \oplus K_n = Ki_A \oplus K_n = K_A \oplus \delta$$

Mike a donc estimé la clé de chiffrement de sécurité $K_A$ mais entachée de la première erreur $\delta$. Il obtient ainsi une estimation de la première clé de chiffrement de sécurité :

$$\widehat{K}_A^\delta = K_A \oplus \delta$$

A l'étape 710, Mike calcule une chaine de chiffrement exacte $K_A$, en sommant l'estimation de la première clé de chiffrement de sécurité $\widehat{K}_A^\delta$, la seconde clé de chiffrement $K_n$ et la première chaine globale $K^\delta$ reçue d'Alice à l'étape 550 :

$$K_{A1} = \widehat{K}_A^\delta \oplus K_n \oplus K^\delta$$

Les erreurs $\delta$ se compensent et Mike obtient :

$$K_{A1} = K_A \oplus K_1$$

De son côté, à l'étape 720, Alice somme la première clé de chiffrement de sécurité $K_A$ et la première clé de chiffrement $K_1$, dont elle détient par définition les valeurs correctes, pour obtenir $K_{A1}$.

$$K_{A1} = K_A \oplus K_1$$

Alice obtient donc le même résultat que Mike.

$K_{A1}$ est par conséquent une première chaine de chiffrement de sécurité partagée entre Alice et Mike.

A l'étape 600, à partir de la clé composite K' reçue du serveur 260, Alice calcule $\widehat{K}_M^\eta$ :

$$\widehat{K}_M^\eta = K' \oplus Ki_A \oplus K_1 = (Ki_A \oplus Ki_M) \oplus Ki_A \oplus K_1 = \widehat{K}_1 \oplus K_M \oplus K_1 = K_M \oplus \eta$$

Alice a donc estimé la clé de chiffrement de sécurité $K_M$ mais entachée de la seconde erreur $\eta$.

A l'étape 610, Alice somme l'estimation de la seconde clé de chiffrement de sécurité $\widehat{K}_M^\eta$ et l'estimation de la seconde clé de chiffrement $\widehat{K}_n^\delta$ pour obtenir $K_{Mn}$.

$$K_{Mn} = \widehat{K}_M^\eta \oplus \widehat{K}_n^\delta = K_M \oplus \eta \oplus K_n \oplus \delta$$

Parallèlement, dans l'étape 620, Mike calcule la somme de la seconde chaine intermédiaire $Ki_M$ et de la première chaine globale $K^\delta$ reçue d'Alice à l'étape 550 :

$$Ki_M \oplus K^\delta$$

Qui se réduit à :

$$K_M \oplus \eta \oplus K_n \oplus \delta$$

C'est-à-dire $K_{Mn}$.
Mike obtient donc le même résultat qu'Alice.
$K_{Mn}$ est par conséquent une seconde chaine de chiffrement de sécurité partagée sans différences entre Alice et Mike.
Les chaines de chiffrement corrigées $K_{A1}$ et $K_{Mn}$ sont enregistrées en tant que chaines de chiffrement utilisables entre Alice et Mike. Il s'agit de chaines à intégrité renforcées.
Dans ce qui vient d'être présenté, c'est Mike qui applique une correction ($K^\delta$) pour obtenir les deux chaines de chiffrement de sécurité partagée. En variante, c'est Alice qui applique les corrections. Dans ce cas, l'étape 560 est obligatoire tandis que l'étape 550 devient facultative. Dans encore une autre variante, Alice et Mike se partagent les tâches de correction. Les étapes 550 et 560 sont obligatoires.
Dans une autre variante de ce troisième mode de réalisation, il n'y a pas de serveur de service de sécurité 260 distinct, et les opérations qui sont réalisées par cette entité sont réalisées par les modules de service de sécurité, 226, 216, de Mike ou Alice.
Bien évidemment, les communications entre Alice (respectivement Mike) avec le serveur de service de sécurité peuvent être cryptées avec des clés de cryptage $K_{SA}$ et $K_{SM}$.
Ce troisième mode de réalisation présente l'avantage de conduire à des clés à sécurité renforcée, $K_{A1}$ et $K_{Mn}$ présentant une garantie d'intégrité. Cette solution est résistante aux attaques par des noeuds du réseau QKD ou du noeud XOR.
Ainsi l'homme du métier constatera qu'une erreur introduite au niveau du noeud XOR peut être systématiquement supprimée en utilisant le service de sécurité et en combinant plusieurs informations entachées d'erreurs pouvant se compenser.

**Revendications**

1. Procédé (300) d'échange de clés de chiffrement dans une infrastructure de communication (201), l'infrastructure de communication comportant un réseau mettant en oeuvre un mécanisme de distribution de clés quantiques, ou réseau QKD (2), le réseau QKD (2) comportant un noeud émetteur (10), un noeud destinataire (20) et une pluralité de noeuds relais ($30_i$) définissant un chemin sur le réseau QKD (2) entre le noeud émetteur (210) et le noeud destinataire (220), deux noeuds successifs le long du chemin étant adaptés pour générer et partager une clé quantique au travers d'un canal quantique reliant lesdits deux noeuds, **caractérisé en ce que**, l'infrastructure de communication comportant, en outre, un service de sécurité (202) comportant un module de service de sécurité (216) sur le noeud émetteur (210), associé à une première clé de sécurité ($K_A$), un module de service de sécurité (226) sur le noeud destinataire (220), associé à une seconde clé de sécurité ($K_M$), et un serveur de service de sécurité (260) en communication respectivement avec les modules de service de sécurité des noeuds émetteur et destinataire au moyen de liaisons de communication classiques, le procédé comporte les étapes de :

- échange (100) d'une première clé de chiffrement ($K_1$) du noeud émetteur vers le noeud destinataire et d'une seconde clé de chiffrement ($K_n$) du noeud destinataire vers le noeud émetteur ;
- calcul (310), par le noeud émetteur (210), d'une première chaine intermédiaire ($Ki_A$) en sommant la première clé de sécurité ($K_A$) et la seconde clé de chiffrement ($K_n$) ;
- transmission (320) de la première chaine intermédiaire ($Ki_A$) vers le serveur de service de sécurité (260) ;
- calcul (330), par le noeud destinataire (210), d'une seconde chaine intermédiaire ($Ki_M$) en sommant la seconde clé de sécurité ($K_M$) et la première clé de chiffrement ($K_1$) ;
- transmission (340) de la seconde chaine intermédiaire ($Ki_M$) vers le serveur de service de sécurité (260) ;
- calcul (350), par le serveur de service de sécurité (260), d'une chaine composite (K') résultant de la somme des première et seconde chaines intermédiaires reçues des noeuds émetteur et destinataire ;
- transmission (360), par le serveur de service de sécurité (260), de la chaine composite (K') au module de service de sécurité (226) du noeud destinataire ;
- sommation (370), par le noeud destinataire (220), de la chaine composite (K'), de la seconde chaine intermédiaire ($Ki_M$) et de la seconde clé de chiffrement ($K_n$), pour extraire la première clé de sécurité ($K_A$), et mémorisation (375) de la première clé de sécurité ($K_A$) en tant que clé de chiffrement dans le volume de clés de chiffrement du noeud destinataire.

2. Procédé selon la revendication 1, comportant en outre :

- transmission (380), par le serveur de service de sécurité (260), de la chaine composite (K') au module de service de sécurité (216) du noeud émetteur (210) ; et,
- sommation (390), par le noeud émetteur (210), de la chaine composite (K'), de la première clé intermédiaire ($Ki_A$) et de la première clé de chiffrement ($K_1$), pour extraire la seconde clé de sécurité ($K_M$), et mémorisation (395) de la seconde clé de sécurité ($K_M$) en tant que clé de chiffrement dans le volume de clés de chiffrement du noeud émetteur.

3. Procédé selon la revendication 1 ou la revendication 2, dans lequel, une première clé de cryptage ($K_{SA}$) étant partagée entre le noeud émetteur (210) et le serveur de sécurité (260), la première chaine intermédiaire ($Ki_A$) est transmise cryptée le long de la liaison classique entre le module de service de sécurité du noeud émetteur et le serveur de service de sécurité en utilisant la première clé de cryptage ($K_{SA}$) et la chaine composite (K') est transmise cryptée le long de la liaison classique entre le serveur de service de sécurité et le module de service de sécurité du noeud émetteur en utilisant la première clé de cryptage ($K_{SA}$).

4. Procédé selon l'une quelconque des revendications 1 à 3, dans lequel, une seconde clé de cryptage ($K_{SM}$) étant partagée entre le noeud destinataire (220) et le serveur de sécurité (260), la seconde chaine intermédiaire ($Ki_M$) est transmise cryptée le long de la liaison de communication classique entre le module de service de sécurité du noeud destinataire et le serveur de service de sécurité en utilisant la seconde clé de cryptage ($K_{SM}$) et la clé composite (K') est transmise cryptée le long de la liaison de communication classique entre le serveur de service de sécurité et le module de service de sécurité du noeud destinataire en utilisant la seconde clé de cryptage ($K_{SM}$).

5. Procédé selon l'une quelconque des revendications précédentes, dans lequel, l'infrastructure (201) comportant, en outre, une entité de calcul centralisée, ou « noeud XOR » (40), le noeud XOR étant connecté à chacun des noeuds du réseau QKD (2) par une liaison de communication classique, le procédé comporte les étapes préalables de :

- calcul (110), par chaque noeud relais (30i), d'une chaine élémentaire (Kei) en sommant les deux clés quantiques des deux canaux quantiques issus dudit noeud relais, et transmission de la chaine élémentaire au noeud XOR (40) ;
- calcul (120), par le noeud XOR (40), d'une chaine globale (K) en sommant les chaines élémentaires (Kei) reçues de chacun des noeuds relais présents le long du chemin entre le noeud émetteur (210) et le noeud destinataire (220) ;
- transmission (130), par le noeud XOR (40), de la chaine globale (K) au noeud destinataire (220) ;
- extraction (140), par le noeud destinataire (220), de la première clé de chiffrement (K1) du noeud émetteur en sommant la chaine globale (K) et la seconde clé de chiffrement (Kn) du noeud destinataire, et mémorisation de la première clé de chiffrement dans un volume (25) de mémorisation de clés de chiffrement du noeud destinataire ;
- transmission (150), par le noeud XOR (40), de la clé globale (K) au noeud émetteur (210) ; et,
- extraction (160), par le noeud émetteur (210), de la seconde clé de chiffrement (Kn) du noeud destinataire (20) en sommant la chaine globale (K) et la première clé de chiffrement (K1) du noeud émetteur, et mémorisation de la seconde clé de chiffrement dans un volume (15) de mémorisation de clés de chiffrement du noeud émetteur.

**6.** Infrastructure de communication (201) adaptée pour la mise en oeuvre d'un procédé d'échange de clés de chiffrement selon l'une quelconque des revendications 1 à 5, comportant un réseau mettant en oeuvre un mécanisme de distribution de clés quantiques, ou réseau QKD (2), le réseau QKD (2) comportant un noeud émetteur (210), un noeud destinataire (220) et une pluralité de noeuds relais $(30_i)$ définissant un chemin sur le réseau QKD (2) entre le noeud émetteur (210) et le noeud destinataire (220), deux noeuds successifs le long du chemin étant adaptés pour générer et partager une clé quantique au travers d'un canal quantique reliant lesdits deux noeuds, l'infrastructure comportant, en outre, un service de sécurité comportant un module de sécurité (216) sur le noeud émetteur (210), associé à une première clé de sécurité ($K_A$), et un module de sécurité (226) sur le noeud destinataire (220), associé à une seconde clé de sécurité ($K_M$), ainsi qu'un serveur de service de sécurité (260) en communication respectivement avec les modules de service de sécurité des noeuds émetteur et destinataire au moyen de liaisons classiques.

**7.** Infrastructure (201) selon la revendication 6, dans laquelle le serveur de service de sécurité (260) est une fonctionnalité supplémentaire du noeud émetteur et/ou du noeud destinataire.

**8.** Infrastructure (201) selon la revendication 6 ou la revendication 7, pour la mise en oeuvre du procédé selon la revendication 5, l'infrastructure comportant, en outre, une entité de calcul, ou noeud XOR (40), le noeud XOR étant connecté à chacun des noeuds du réseau QKD (2) par une liaison de communication classique.

**9.** Infrastructure (201) selon la revendication 8, dans laquelle le noeud XOR (260) est une fonctionnalité supplémentaire du noeud émetteur et/ou du noeud destinataire.

**10.** Infrastructure selon l'une quelconque des revendications 6 à 9, dans laquelle, les liaisons de communication étant des liaisons IP sur un réseau de communication classique, le serveur de service de sécurité (260), le module de service de sécurité (216) du noeud émetteur (210) et le module de service de sécurité (226) du noeud destinataire (220) utilisent des adresses IP réservées qui sont différentes des adresses IP des noeuds émetteur et destinataire, seules ces dernières étant connues par le réseau QKD (2).

FIG.1

EP 4 580 116 A1

| Nœud 10 Alice | Nœud 30₁ | Nœud 30ᵢ | Nœud 30ₙ₋₁ | Nœud 20 Mike | XOR 40 |
|---|---|---|---|---|---|

$K_1$ | $K_{RA}$ | $K_1$ | $K_2$ | $K_i$ | $K_{i+1}$ | $K_{n-1}$ | $K_n$ | $K_n$ | $K_{RM}$ | $K_{RA}$ | $K_{RM}$

$K_{RA}[Ke_0]$

$Ke_0 = K_0 \oplus K_1$

(105')

110 $\{$

$Ke_1 = K_1 \oplus K_2$

$Ke_i = K_i \oplus K_{i+1}$

$Ke_{n-1} = K_{n-1} \oplus K_n$

$K_{RM}[Ke_n]$

(115') $Ke_n = K_n \oplus K_{n+1}$

$\frac{100}{(100')}$

K 120

$K_{RM}[K]$

140 (140') $K \oplus K_n (K \oplus K_{n+1})$

130

$K_1(K_0)$ 145 (145')

$K_{RA}[K]$

$K \oplus K_1 (K \oplus K_0)$ 160 (160')

150

$K_n(K_{n+1})$ 165 (165')

16

FIG.2

FIG.3

FIG.4

FIG.5

FIG.6

EP 4 580 116 A1

**EP 4 580 116 A1**

Europäisches Patentamt
European Patent Office
Office européen des brevets

## RAPPORT DE RECHERCHE EUROPEENNE

Numéro de la demande

EP 24 22 3396

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2023/018829 A1 (CHO JOO YEON [DE] ET AL) 19 janvier 2023 (2023-01-19) * alinéas [0039], [0064]; figures 1,7,6 * | 5,7-10 | INV. H04L9/08 |
| Y | "Quantum key distribution networks - Key management Amendment 1; Y.3803 (2020) Amd. 1 (11/2023)", ITU-T STANDARD Y.3803, INTERNATIONAL TELECOMMUNICATION UNION, GENEVA ; CH , no. Y.3803 (2020) Amd. 1 (11/2023) 29 novembre 2023 (2023-11-29), pages 1-28, XP044384278, Extrait de l'Internet: URL:https://www-api.itu.int/dms/pay/itu-t/ rec/y/T-REC-Y.3803-202311-I!Amd1!PDF-E.pdf [extrait le 2024-02-09] * section 9; figures 7,8 * | 5,7-10 | |
| Y | CN 109 995 513 B (CHENGDU LINGGUANG QUANTUM TECH CO LTD) 19 juin 2020 (2020-06-19) * figures 1,4 * | 5,7-10 | DOMAINES TECHNIQUES RECHERCHES (IPC) H04L |

-/--

Le présent rapport a été établi pour toutes les revendications

| Lieu de la recherche | Date d'achèvement de la recherche | Examinateur |
|---|---|---|
| Munich | 13 mai 2025 | Billet, Olivier |

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 24 22 3396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ALFRED J MENEZES ET AL: "Handbook of Applied Cryptography", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1 janvier 1997 (1997-01-01), XP002733761, ISBN: 978-0-8493-8523-0 Extrait de l'Internet: URL:http://www.cacr.uwaterloo.ca/hac/about/chap13.pdf [extrait le 2014-12-12] | 1-4,6 | |
| Y | * section 13.2.3; figure 13.1 * | 5,7-10 | |

----- 

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 13 mai 2025 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 22 3396

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-05-2025

| Document brevet cité au rapport de recherche | Date de publication | Membre(s) de la famille de brevet(s) | Date de publication |
|---|---|---|---|
| US 2023018829 A1 | 19-01-2023 | EP 4123957 A1<br>US 2023018829 A1 | 25-01-2023<br>19-01-2023 |
| CN 109995513 B | 19-06-2020 | CN 109995513 A<br>WO 2019128753 A1 | 09-07-2019<br>04-07-2019 |

EPO FORM P0460